# EUROPEAN PATENT APPLICATION

(11) **EP 4 697 018 A1**
(43) Date of publication of application: **18.02.2026**
(21) Application number: 25191745.6
(22) Date of filing: 25.07.2025
(51) Int. Cl.: G01N 27/87

(54) **PIPELINE DEFECT IN-LINE INSPECTOR BASED ON PLANAR MAGNETIC FLUX LEAKAGE ARRAY IMAGING**

(30) Priority: 12.08.2024 CN 202411097320
(71) Applicant: Chengdu Youyida Technology Co., Ltd, Chengdu, Sichuan 610096 (CN)
(72) Inventor: HU, Fabin, Chengdu, Sichuan (CN)
(74) Representative: Sun, Yiming

(57) **Abstract**

The present invention provides a pipeline defect in-line inspector based on planar magnetic flux leakage array imaging. Based on the existing magnetization module and the existing plurality of planar magnetic flux leakage array imaging modules, a plurality of magnetic flux leakage image high-speed synchronous acquisition units are added into the present invention to realize high spatial resolution magnetic flux leakage imaging and obtain a plurality of magnetic flux leakage images under the movement state of the pipeline defect in-line inspector. A location and magnetic flux leakage image synchronization module is added into the present invention to synchronize the plurality of magnetic flux leakage images with an acquisition location. An image synchronization module registers each two adjacent pluralities of magnetic flux leakage images by acquisition locations, data characteristics and physical model to obtain a pipeline magnetic flux leakage field distribution map of ultra-high spatial resolution, providing a data basis for quantitative evaluation and locating of defects of the pipeline.

## Description

### FIELD OF THE INVENTION

This application claims priority under the Paris Convention to Chinese Patent Applications No. 202411097320.3, filed on August 12, 2024, the entirety of which is hereby incorporated by reference for all purposes as if fully set forth herein.

The present invention relates to the field of pipeline defect inline inspection, more particularly to a pipeline defect in-line inspector based on planar magnetic flux leakage (MFL) array imaging.

### BACKGROUND OF THE INVENTION

Steel pipelines undertake important tasks in the transportation of energy such as oil and natural gas. During the course of long-terms running, defects such as pipeline corrosion and cracks are prone to occur. The defects will easily cause pipeline rupture, leading to problems such as leaks and even explosions, which pose great threats to people's lives and property safety. To prevent pipeline rupture caused by defects, magnetic flux leakage in-line inspection is commonly used both domestically and internationally to inspect and timely find out defects in in-service oil and gas pipelines for emergency repairs.

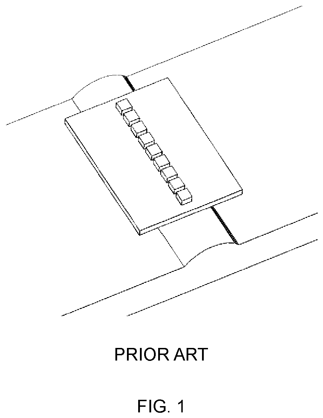

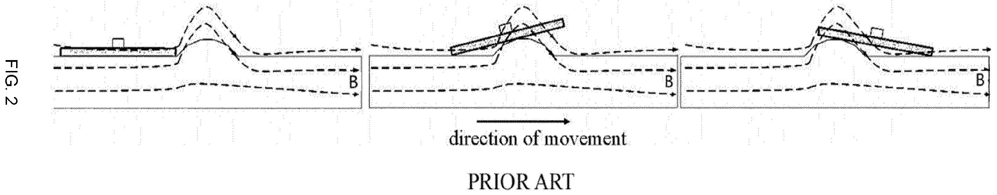

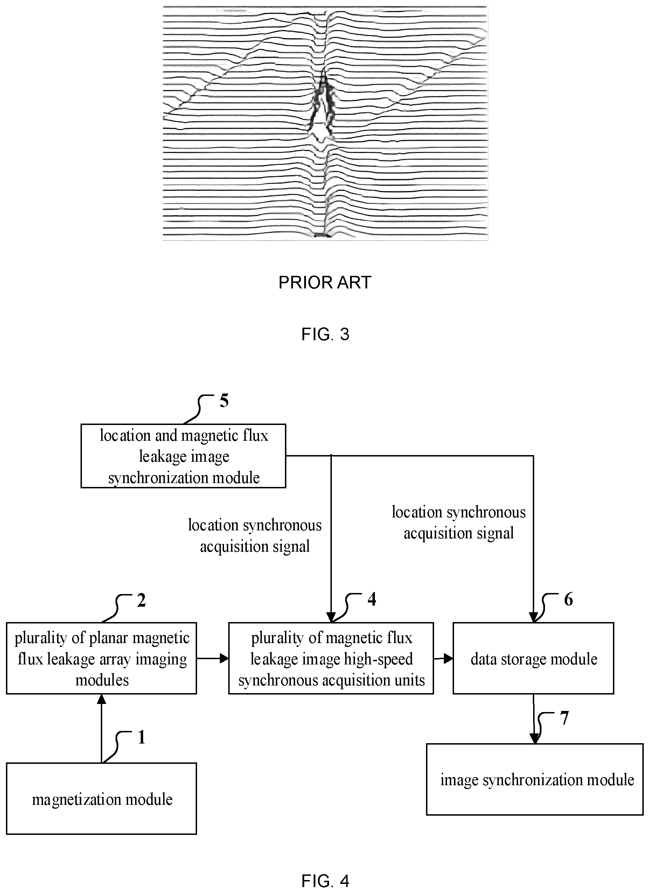

As shown in FIG. 1, in the existing pipeline defect in-line inspector, discrete magnetic sensors such as Hall sensors and tunnel magnetoresistance sensors (TMR) are arranged in a straight line to form a detection probe, and multiple detection probes are arranged along the circumference of pipeline defect in-line inspector. As shown in FIG. 2, during the process of inspection, the pipeline defect in-line inspector moves along the axis of the pipeline under the push of oil, natural gas, etc. inside the pipeline, the detection probes simultaneously acquire magnetic flux leakage. During the process of defect recognition, as shown in FIG. 3, the magnetic flux leakage data acquired by detection probes are unfolded to form a data matrix according to the circumferential position on and the mileage of the pipeline defect in-line inspector, and defects can be recognized by extracting abnormal information of magnetic flux leakage distribution from the data matrix.

Due to the large volume of discrete magnetic sensors, the resolutions of mechanical scanning devices such as mileage wheels are limited, which make mileage information difficult to improve, the spatial resolution of the pipeline defect in-line inspector has always been difficult to exceed 1mm. In addition, as shown in FIG. 2, during the moving of the detection probe, due to the influence of weld reinforcement, the lift-off disturbance will occur, causing the signal of magnetic flux leakage severely distorted, which makes recognition of weld crack a worldwide problem. For example, in the past 10 years, more than 370 oil and gas pipeline leakage accidents have occurred in China, with pipeline circumferential weld cracks accounting for nearly 30%. More seriously, "7.2" accident and "6.10" accident occurred in China Myanmar natural gas pipeline in 2017 and 2018, respectively. The risk assessment of circumferential weld cracks to Shaanxi Beijing pipeline in 2021 shows that the probability of recognizing circumferential weld crack by ultra-high-definition magnetic flux leakage detection is more than twice of that of ordinary magnetic flux leakage detection. However, even so, the recognition accuracy of ultra-high-definition magnetic flux leakage detection was just only 7.14% (among 140 abnormal circumferential welding cracks, only 10 circumferential welding seams were recognized). It is far from meeting the needs of circumferential welding crack recognition. Further improving the spatial resolution and anti-disturbance ability of magnetic flux leakage in-line inspection is an urgent need for the safe operation of oil and gas pipelines.

In a Chinese invention patent application, which is published on June 11, 2024 with publication number CN 118169223A, the applicant proposed a magnetic flux leakage detector for pipeline defect based on magneto-optical imaging, which converts magnetic field signals into large-area optical signals and acquires them through an image acquisition module, then the ultra-high spatial resolution magnetic field signals at the pixel level (≤100µm) are obtained. The ultra-high spatial resolution magnetic field signals will help to recognize small crack signal, and a planar magnetic field signal can be obtained by a single acquisition, therefore the self-comparison can be performed within a detecting section during subsequent offline processing, making the magnetic flux leakage detector has anti-jitter characteristic, which is helpful for the recognition of circumferential weld cracks.

However, the Chinese invention patent application only proposes a technical solution of acquiring and obtaining a planar magnetic field signal, namely a magnetic flux leakage image based on magneto-optical imaging. During the process of pipeline defect in-line inspection, the pipeline defect in-line inspector moves in pipeline with high speed, needing to continuously obtain high spatial resolution magnetic flux leakage images in very short time and record the locations of imagine acquisitions to obtain the defects of the entire pipeline, including circumferential weld cracks.

### SUMMARY OF THE INVENTION

The present invention aims to overcome the deficiencies of the prior art, and provides a pipeline defect in-line inspector based on planar magnetic flux leakage array imaging, so as to continuously obtain high spatial resolution magnetic flux leakage images in very short time and record the locations of imagine acquisitions to solve the problem of in-line inspection of the defects of entire pipeline, including circumferential weld cracks.

To achieve these objectives, in accordance with the present invention, a pipeline defect in-line inspector based on planar magnetic flux leakage array imaging is provided, comprising:
a magnetization module, which consists of at least one permanent magnet and at least one magnetic conductive structure connected to the permanent magnet, the magnetization module is attached to an inner surface of a wall of a pipeline, magnetic induction lines generated by the permanent magnet are coupled into the wall of the pipeline through the magnetic conductive structure, the magnetic induction lines conduct in the wall of the pipeline, forming closed magnetic induction line loops, which conduct through the permanent magnet, the magnetic conductive structure and the wall of the pipeline, when a defect exists in the wall of the pipeline, magnetic induction lines will leak from vicinity of the defect to external space of the wall of the pipeline, forming a magnetic flux leakage field;
a plurality of planar magnetic flux leakage array imaging modules, which are distributed over an inner surface of the wall of the pipeline between two poles of the magnetization module, each planar magnetic flux leakage array imaging module is a planar micro-element array magnetic sensing unit, which is composed of magnetic sensing micro-elements arranged in planar array that convert magnetic signals into electrical or optical signals;
wherein further comprising:
   a data storage module;
   a plurality of magnetic flux leakage image high-speed synchronous acquisition units, which are used for synchronous acquisition of a plurality of magnetic flux leakage images: each of which one-to-one corresponds to a planar magnetic flux leakage array imaging module, under the control of a synchronous acquisition trigger signal, each magnetic flux leakage image high-speed synchronous acquisition unit synchronously acquires its corresponding electrical or optical signals converted by magnetic sensing micro-elements inside its corresponding planar magnetic flux leakage array imaging module globally at high speed to generate a magnetic flux leakage image, which is composed of electrical or optical signals acquired at same time point, thus the plurality of magnetic flux leakage images generated at same time point by the plurality of magnetic flux leakage image high-speed synchronous acquisition units are obtained and sent to the data storage module for storage;
   a location and magnetic flux leakage image synchronization module, which is used to synchronize the plurality of magnetic flux leakage images with an acquisition location, and send the acquisition location to the data storage module for storage;
   the plurality of magnetic flux leakage image high-speed synchronous acquisition units and location and magnetic flux leakage image synchronization module operate continuously, while the pipeline defect in-line inspector moves in the pipeline, and all pluralities of magnetic flux leakage images and their corresponding acquisition locations in the pipeline are obtained;
   an image synchronization module, which is used to read all pluralities of magnetic flux leakage images and their corresponding locations from the data storage module and register each two adjacent pluralities of magnetic flux leakage images by acquisition locations, data characteristics and physical model to obtain a pipeline magnetic flux leakage field distribution map of ultra-high spatial resolution, providing a data basis for quantitative evaluation and locating of defects of the pipeline.

The objectives of the present invention are realized as follows:
Based on the existing magnetization module and the existing plurality of planar magnetic flux leakage array imaging modules which distributed over the inner surface of the wall of the pipeline between two poles of the magnetization module, a plurality of magnetic flux leakage image high-speed synchronous acquisition units are added into the pipeline defect in-line inspector based on planar magnetic flux leakage array imaging (hereinafter referred as the pipeline defect in-line inspector) of the present invention to perform a global high-speed synchronous acquisition on magnetic sensing micro-elements in each planar magnetic flux leakage array imaging module to realize high spatial resolution magnetic flux leakage imaging and obtain a plurality of magnetic flux leakage images under the movement state of the pipeline defect in-line inspector. At the same time, a location and magnetic flux leakage image synchronization module is added into the pipeline defect in-line inspector to synchronize the plurality of magnetic flux leakage images with an acquisition location. And then, the image synchronization module registers each two adjacent pluralities of magnetic flux leakage images by acquisition locations, data characteristics and physical model to obtain a pipeline magnetic flux leakage field distribution map of ultra-high spatial resolution, providing a data basis for quantitative evaluation and locating of defects of the pipeline.

The present invention adopts a three-level synchronization architecture, which consists of synchronous acquisition of magnetic sensing micro-elements (precise synchronization within a unit), synchronous acquisition and storage of location and leakage magnetic field images (rough alignment between modules) and precise correction and registration of two adjacent leakage magnetic field images (pixel level alignment of data) to continuously obtain high spatial resolution magnetic flux leakage images in very short time to solve the problem of in-line inspection of the defects of entire pipeline, including circumferential weld cracks. In addition, compared to existing ultra-high spatial resolution magnetic flux leakage in-line inspector, the pipeline defect in-line inspector based on planar magnetic flux leakage array imaging of the present invention has the following advantages:
(1). The present invention adopts global synchronous acquisition, synchronous acquisition and storage of location and leakage magnetic field images, which can obtain a plurality of regional magnetic flux leakage images with acquisition location within very short time window. And in the very short time window, the influence of the movement of pipeline defect in-line inspector on the acquisition of leakage magnetic field images can be ignored, so the present invention has good anti lift-off disturbance performance.
(2). In the present invention, only the distance of adjacent acquisition locations is required to be less than the axial length (The length can reach centimeter level) of the region of planar magnetic flux leakage array imaging, far less than 1mm of existing ultra-high spatial resolution magnetic flux leakage in-line inspector and greatly reducing the accuracy requirement for the acquisition location sensing module. For instance, the adjacent pluralities of magnetic flux leakage images can be acquired overlappingly, and through the image registration, the decrease in detection spatial resolution and the data loss, both of which are caused by slipping of the inner wheel can be avoided.

### BRIEF DESCRIPTION OF THE DRAWING

The above and other objectives, features and advantages of the present invention will be more apparent from the following detailed description taken in conjunction with the accompanying drawings, in which:
FIG. 1 is a structure diagram that an existing pipeline defect in-line inspector inspects defects by using linear array magnetic sensors;
FIG. 2 is a schematic diagram of generating weld reinforcement lift-off disturbance during the moving when an existing pipeline defect in-line inspector inspects defects by using linear array magnetic sensors;
FIG. 3 is a diagram of weld crack magnetic flux leakage image, which is acquired by using linear array magnetic sensors of the existing pipeline defect in-line inspector;
FIG. 4 is a block diagram of a pipeline defect in-line inspector based on planar magnetic flux leakage array imaging in accordance with one embodiment of the present invention;
FIG. 5 is a three-dimensional structure diagram of a pipeline defect in-line inspector based on planar magnetic flux leakage array imaging in accordance with one embodiment of the present invention;
FIG. 6 is a structural section diagram of a pipeline defect in-line inspector based on planar magnetic flux leakage array imaging in accordance with one embodiment of the present invention;
FIG. 7 is a structural section diagram of a pipeline defect in-line inspector based on planar magnetic flux leakage array imaging in accordance with another embodiment of the present invention;
FIG. 8 is a schematic diagram that a pipeline defect in-line inspector based on planar magnetic flux leakage array imaging of the present invention inspects defects by using planar magnetic flux leakage array imaging module;
FIG. 9 is a diagram of overcoming weld reinforcement lift-off disturbance during the moving when a pipeline defect in-line inspector based on planar magnetic flux leakage array imaging of the present invention inspects defects by using plurality of planar magnetic flux leakage array imaging modules;
FIG. 10 is an illustration of weld crack magnetic flux leakage image, which is obtained by a pipeline defect in-line inspector based on planar magnetic flux leakage array imaging of the present invention.

### DETAILED DESCRIPTION OF THE PREFERRED EMBODIMENT

Hereinafter, preferred embodiments of the present invention will be described with reference to the accompanying drawings. It should be noted that the similar modules are designated by similar reference numerals although they are illustrated in different drawings. Also, in the following description, a detailed description of known functions and configurations incorporated herein will be omitted when it may obscure the subject matter of the present invention.

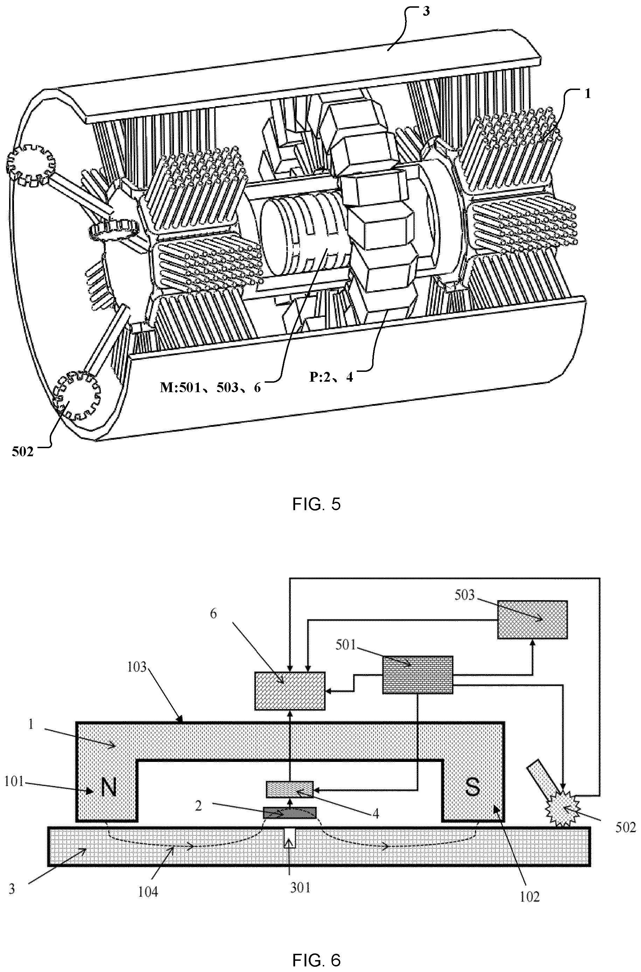

FIG. 4 and FIG. 5 are a block diagram and a three-dimensional structure diagram respectively of a pipeline defect in-line inspector based on planar magnetic flux leakage array imaging in accordance with one embodiment of the present invention.

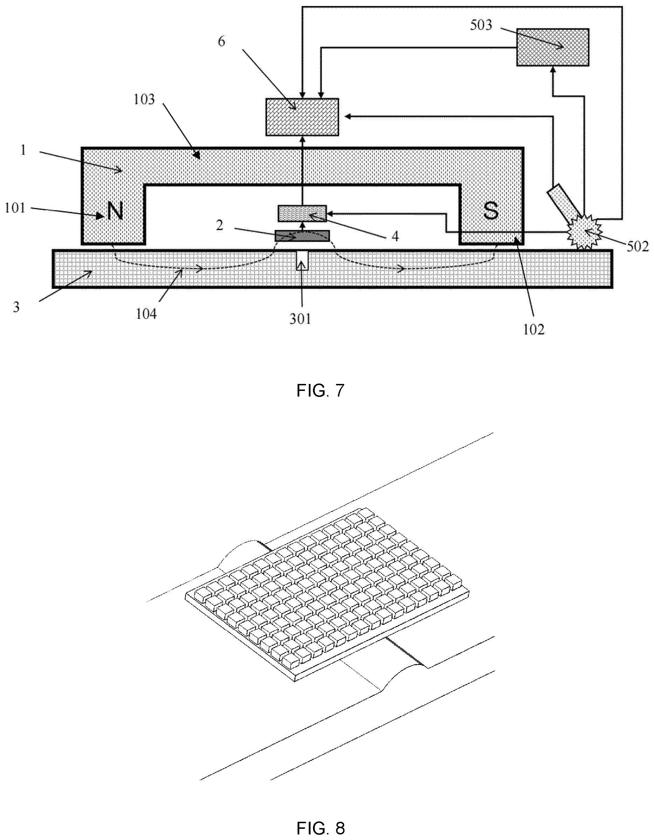

In one embodiment, as shown in FIG. 4 and FIG. 5, a pipeline defect in-line inspector based on planar magnetic flux leakage array imaging of the present invention, which locates in a pipeline comprises a magnetization module 1 and a plurality of planar magnetic flux leakage array imaging modules 2, wherein:
As shown in FIG. 6 and FIG. 7, the magnetization module 1 consists of two permanent magnets 101, 102 and a magnetic conductive structure 103 connected to the two permanent magnets 101, 102, having N pole and S pole. The magnetization module 1 is attached to an inner surface of a wall of a pipeline, and magnetic induction lines 104 generated by the two permanent magnets 101, 102 are coupled into the wall of the pipeline through the magnetic conductive structure 103. The magnetic induction lines 104 conduct in the wall of the pipeline, forming closed magnetic induction line loops, which conduct through the two permanent magnets 101, 102, the magnetic conductive structure 103 and the wall of the pipeline, when a defect exists in the wall of the pipeline, magnetic induction lines 104 will leak from vicinity of the defect to external space of the wall of the pipeline, forming a magnetic flux leakage field.

As shown in FIG. 5, the plurality of planar magnetic flux leakage array imaging modules 2 are distributed over an inner surface of the wall of the pipeline between two poles, namely N pole and S pole of the magnetization module 1, each planar magnetic flux leakage array imaging module is a planar micro-element array magnetic sensing unit, which is composed of magnetic sensing micro-elements arranged in planar array that convert magnetic signals into electrical or optical signals.

In a specific implementation process, we can add more permanent magnets and magnetic conductive structures into the magnetization module 1, and change the direction of the magnetization module 1, for example, from the circumferential layout to axial layout in the pipeline. The planar micro-element array magnetic sensing unit is preferably a unit of tightly arranged Hall or tunnel magnetoresistance (TMR) sensors, or another planar micro-element array composed of magnetic sensors which convert magnetic signal to electrical signal, or is made of magnetic sensitive materials that can convert magnetic signals into optical signals such as magnetic optical thin films (Faraday rotation, Kerr rotation, etc.) and photonic crystals, where each small region of magnetic sensitive material corresponds to a magnetic sensing micro-element. To measure magnetic flux leakage field of defect, magnetic sensor and magnetic sensitive material should be placed as close to the inner surface of pipeline's wall as possible. In addition, magnetic sensor and magnetic sensitive material should also be able to operate stably in high-pressure environments of oil and gas pipelines.

In the present invention, to continuously obtain magnetic flux leakage images in very short time to solve the problem of in-line inspection of the defects of entire pipeline, including circumferential weld cracks, as shown in FIG. 4, a plurality of magnetic flux leakage image high-speed synchronous acquisition units 4, a location and magnetic flux leakage image synchronization module 5, a data storage module 6 and an image synchronization module 7 are added into the present invention to output a pipeline magnetic flux leakage field distribution map of ultra-high spatial resolution.

The plurality of magnetic flux leakage image high-speed synchronous acquisition units 4 are used for synchronous acquisition of a plurality of magnetic flux leakage images: each of which one-to-one corresponds to a planar magnetic flux leakage array imaging module, under the control of a synchronous acquisition trigger signal, each magnetic flux leakage image high-speed synchronous acquisition unit synchronously acquires its corresponding electrical or optical signals converted by magnetic sensing micro-elements inside its corresponding planar magnetic flux leakage array imaging module globally at high speed to generate a magnetic flux leakage image, which is composed of electrical or optical signals acquired at same time point, thus the plurality of magnetic flux leakage images generated at same time point by the plurality of magnetic flux leakage image high-speed synchronous acquisition units 4 are obtained and sent to the data storage module 6 for storage.

In the present invention, the synchronous acquisition of the electrical or optical signals converted by magnetic sensing micro-elements should be complete within very short time to guarantee the generated magnetic flux leakage image having high spatial resolution and effectively suppressing lift-off disturbance under the high-speed moving state of the pipeline defect in-line inspector. For example, under the speed of 5m/s, to realize a synchronous acquisition of spatial resolution of 0.1mm, the synchronous acquisition of the electrical or optical signals converted by magnetic sensing micro-elements should be complete within a time window of 20µs, and the faster the acquisition speed is, the better the acquisition performance is and the small the impact by lift-off disturbance is.

When the planar micro-element array magnetic sensing unit is a unit of tightly arranged Hall sensors, Tunnel Magnetoresistance sensors or another planar micro-element array composed of magnetic sensors which convert magnetic signal to electrical signal, multiple sample and hold circuits, a synchronous trigger circuit and multiple analog to digital converters compose a magnetic flux leakage image high-speed synchronous acquisition unit, each magnetic sensing micro-element, i.e. the magnetic sensor electrical signal output terminal is connected to its corresponding sample and hold circuit, all sample and hold circuits are connected to the synchronous trigger circuit. When a trigger signal outputted by the synchronous trigger circuit is arrived, all sample and hold circuits synchronously hold their respective current electrical signals outputted by their corresponding magnetic sensing micro-elements, and send their respective current electrical signals to their corresponding analog to digital converters in the backend to convert them into digital signals, all digital signals form a data matrix according to the locations of magnetic sensing micro-element in planar magnetic flux leakage array imaging module, and the data matrix is a magnetic flux leakage image.

When the planar micro-element array magnetic sensing unit is made of magnetic sensitive material, an image sensor is taken as a magnetic flux leakage image high-speed synchronous acquisition unit. **If** the change of light intensity is used to represent the strength of magnetic field, the optical signals modulated by magnetic sensitive material incident on an image sensor after focusing through an optical path. If the polarization state of light is used to represent the strength of the magnetic field, the optical signals modulated by magnetic sensitive material incident on an image sensor after detecting by a polarizer and focusing through an optical path. The image sensor operates in global exposure mode, and exposure time should be short enough to meet the high spatial resolution imaging requirement under the high-speed moving state of the pipeline defect in-line inspector. The image acquired by the image sensor is a magnetic flux leakage image.

The location and magnetic flux leakage image synchronization module 5 is used to synchronize the plurality of magnetic flux leakage images with an acquisition location, and send the acquisition location to the data storage module for storage.

In one embodiment, the location and magnetic flux leakage image synchronization module 5 acquires a location of the pipeline defect in-line inspector in the pipeline and output a location synchronous acquisition signal at each time when the pipeline defect in-line inspector moves each a certain distance, the location synchronous acquisition signal triggers the plurality of magnetic flux leakage image high-speed synchronous acquisition units 4 to acquire a plurality of magnetic flux leakage images and send the plurality of magnetic flux leakage images to the data storage module, and the acquired location is the acquisition location, the location synchronous acquisition signal triggers the data storage module simultaneously to store the acquisition location.

In another embodiment, the location and magnetic flux leakage image synchronization module 5 sets the acquisition time points of the plurality of magnetic flux leakage image high-speed synchronous acquisition units by a location synchronous acquisition signal, which makes time interval between two adjacent acquisitions of each magnetic flux leakage image high-speed synchronous acquisition unit is less than the time needed for the pipeline defect in-line inspector to move an axial length of a detecting region of a planar magnetic flux leakage array imaging module, and associates the plurality of magnetic flux leakage images with an acquisition location according to the time point of acquiring the plurality of magnetic flux leakage images and the time point of the acquisition location.

In another embodiment, the location and magnetic flux leakage image synchronization module 5 sets the acquisition frame rate of the plurality of magnetic flux leakage image high-speed synchronous acquisition units to a fixed value according to a movement speed of the pipeline defect in-line inspector, which makes time interval between two adjacent acquisitions of each magnetic flux leakage image high-speed synchronous acquisition unit is less than the time needed for the pipeline defect in-line inspector to move an axial length of a detecting region of a planar magnetic flux leakage array imaging module, and associates the plurality of magnetic flux leakage images with an acquisition location according to the time point of acquiring the plurality of magnetic flux leakage images and the time point of the acquisition location.

Data storage module 6 is used to store the plurality of magnetic flux leakage images and their associated acquisition location.

In one embodiment, as shown in FIG. 6, the location and magnetic flux leakage image synchronization module 5 is composed of sensing units, such as a clock 501, a mileage wheel 502 and an inertial navigation device 503 that can record position information, either individually or in combination.

Mileage wheel 502 refers to a sensing device that can generate a periodic signal by rolling wheels on the pipeline wall to record the movement distance of the pipeline defect in-line inspector in a pipeline.

Inertial navigation device 503 refers to a sensor that can use acceleration sensors and/or gyroscopes to sense the movement distance, attitude, etc. of the pipeline defect in-line inspector in a pipeline.

In one embodiment, mileage wheel 502 and inertial navigation device 503 are applied simultaneously or only one of them is applied. When applied simultaneously, the locations of mileage wheel 502 and inertial navigation device 503 are compensated for each other to obtain a more accurate location.

In one embodiment, when the time signal of clock 501 is used as a reference signal, the time signal is sent as the location synchronous acquisition signal to the plurality of magnetic flux leakage image high-speed synchronous acquisition units 4, mileage wheel 502, inertial navigation device 503 and the data storage module 6 for marking a time point of acquiring a plurality of magnetic flux leakage images and a time point of acquiring a location during acquisition and establishing the correspondence between a plurality of magnetic flux leakage images and a location by taking time as intermediate variable, namely realizing alignment of a plurality of magnetic flux leakage images with an acquisition location. For example, the time signal is sent to the plurality of magnetic flux leakage image high-speed synchronous acquisition units 4, mileage wheel 502, inertial navigation device 503, when acquiring a plurality of magnetic flux leakage images or acquiring a location during acquisition or storage, the time point is marked and sent to data storage module 6. Or the time signal is sent to the data storage module 6, when data storage module 6 receives a plurality of magnetic flux leakage images or an acquisition location, the time point of receiving is marked to the plurality of magnetic flux leakage images or the acquisition location.

When a time signal of clock 501 is used as a control signal, the time signal is sent as the location synchronous acquisition signal to the plurality of magnetic flux leakage image high-speed synchronous acquisition units 4, mileage wheel 502, inertial navigation device 503 and the data storage module 6 for controlling the synchronous acquisition or storage of a plurality of magnetic flux leakage images and a location and establishing the correspondence between a plurality of magnetic flux leakage images and a location by taking time as intermediate variable, namely realizing alignment of a plurality of magnetic flux leakage images with an acquisition location. For example, the plurality of magnetic flux leakage image high-speed synchronous acquisition units 4 acquires a plurality of magnetic flux leakage images, and mileage wheel 502 and inertial navigation device 503 acquires a location, after receiving the time signal, and the correspondence between a plurality of magnetic flux leakage images and a location is established in the data storage module 6 according to the time point of receiving the time signal.

It should be noted that clock 501 is only a preferred option for acquisition of the plurality of magnetic flux leakage image high-speed synchronous acquisition units 4, storage of data storage module 6 and location acquisition of mileage wheel 502 and inertial navigation device 503. In another embodiment, the time signal of clock 501 in above embodiment is replaced with the location generated by mileage wheel 502 to control or mark for plurality of magnetic flux leakage images, realizing alignment of a plurality of magnetic flux leakage images with an acquisition location. As shown in FIG. 7, a structural section diagram of a pipeline defect in-line inspector, which adopts the location acquired by mileage wheel 502 to synchronously acquire a plurality of magnetic flux leakage images. More specifically:
The location and magnetic flux leakage image synchronization module 5 is composed of a mileage wheel 502 and an inertial navigation device 503 separately or in combination. When the location and magnetic flux leakage image synchronization module 5 separately adopts a mileage wheel 502 or an inertial navigation device 503, the location generated by location and magnetic flux leakage image synchronization module 5 is taken as a location synchronous acquisition signal and sent to the plurality of magnetic flux leakage image high-speed synchronous acquisition units 4 and/or the data storage module 6, the plurality of magnetic flux leakage image high-speed synchronous acquisition units 4 performs a global high-speed synchronous acquisition according to the location synchronous acquisition signal and obtains a plurality of magnetic flux leakage images, or marks a location during acquisition or storage, realizing alignment of a plurality of magnetic flux leakage images with an acquisition location. When mileage wheel, inertial navigation device are applied simultaneously, the locations of mileage wheel and inertial navigation device are compensated for each other.

The image synchronization module 7 reads all pluralities of magnetic flux leakage images and their corresponding locations from the data storage module 6, and registers each two adjacent pluralities of magnetic flux leakage images by acquisition locations, data characteristics and physical model to obtain a pipeline magnetic flux leakage field distribution map of ultra-high spatial resolution, providing a data basis for quantitative evaluation and locating of defects of the pipeline.

In one embodiment, as shown in FIG. 5, we can make a planar magnetic flux leakage array imaging module (2) and its corresponding magnetic flux leakage image high-speed synchronous acquisition unit (4) into an integrated detection probe P, and combine clock 501, inertial navigation device 503 in planar magnetic flux leakage array imaging module 5 and data storage module 6 to form an electronic assembly M.

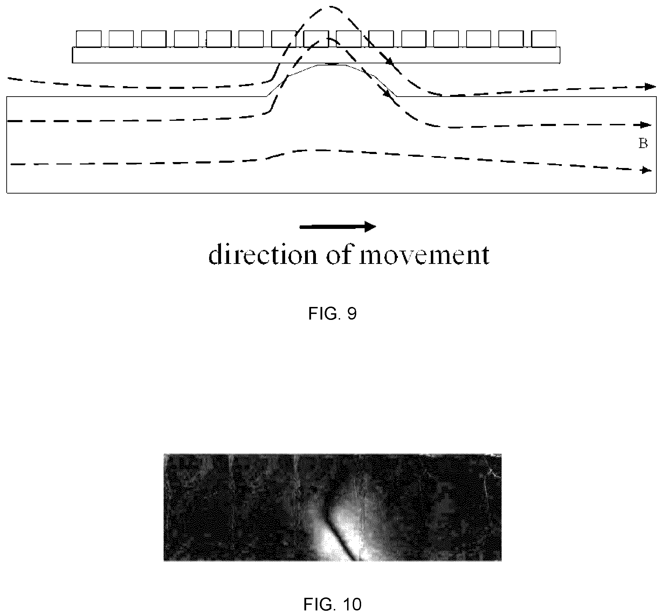

As shown in FIG. 8, the plurality of planar magnetic flux leakage array imaging modules 2 is a planar micro-element array, which, as shown in in FIG. 9 has overcome the weld reinforcement lift-off disturbance during the moving of a pipeline defect in-line inspector.

FIG. 10 is an illustration of weld crack magnetic flux leakage image, which is obtained by a pipeline defect in-line inspector based on planar magnetic flux leakage array imaging of the present invention. Comparing to the weld crack magnetic flux leakage image shown in FIG. 3, The spatial resolution of the present invention has been improved significantly, which solves the problem of in-line inspection of the defects of entire pipeline, including circumferential weld cracks, providing a data basis for quantitative evaluation and locating of defects of the pipeline.

While illustrative embodiments of the invention have been described above, it is, of course, understand that various modifications will be apparent to those of ordinary skill in the art. Such modifications are within the spirit and scope of the invention, which is limited and defined only by the appended claims.

## Claims

1. A pipeline defect in-line inspector based on planar magnetic flux leakage array imaging, comprising:
a magnetization module, which consists of at least one permanent magnet and at least one magnetic conductive structure connected to the permanent magnet, the magnetization module is attached to an inner surface of a wall of a pipeline, magnetic induction lines generated by the permanent magnet are coupled into the wall of the pipeline through the magnetic conductive structure, the magnetic induction lines conduct in the wall of the pipeline, forming closed magnetic induction line loops, which conduct through the permanent magnet, the magnetic conductive structure and the wall of the pipeline, when a defect exists in the wall of the pipeline, magnetic induction lines will leak from vicinity of the defect to external space of the wall of the pipeline, forming a magnetic flux leakage field;
a plurality of planar magnetic flux leakage array imaging modules, which are distributed over an inner surface of the wall of the pipeline between two poles of the magnetization module, each planar magnetic flux leakage array imaging module is a planar micro-element array magnetic sensing unit, which is composed of magnetic sensing micro-elements arranged in planar array that convert magnetic signals into electrical or optical signals;
wherein further comprising:
a data storage module;
a plurality of magnetic flux leakage image high-speed synchronous acquisition units, which are used for synchronous acquisition of a plurality of magnetic flux leakage images: each of which one-to-one corresponds to a planar magnetic flux leakage array imaging module, under the control of a synchronous acquisition trigger signal, each magnetic flux leakage image high-speed synchronous acquisition unit synchronously acquires its corresponding electrical or optical signals converted by magnetic sensing micro-elements inside its corresponding planar magnetic flux leakage array imaging module globally at high speed to generate a magnetic flux leakage image, which is composed of electrical or optical signals acquired at same time point, thus the plurality of magnetic flux leakage images generated at same time point by the plurality of magnetic flux leakage image high-speed synchronous acquisition units are obtained and sent to the data storage module for storage;
a location and magnetic flux leakage image synchronization module, which is used to synchronize the plurality of magnetic flux leakage images with an acquisition location, and send the acquisition location to the data storage module for storage;
the plurality of magnetic flux leakage image high-speed synchronous acquisition units and location and magnetic flux leakage image synchronization module operate continuously, while the pipeline defect in-line inspector moves in the pipeline, and all pluralities of magnetic flux leakage images and their corresponding acquisition locations in the pipeline are obtained;
an image synchronization module, which is used to read all pluralities of magnetic flux leakage images and their corresponding locations from the data storage module and register each two adjacent pluralities of magnetic flux leakage images by acquisition locations, data characteristics and physical model to obtain a pipeline magnetic flux leakage field distribution map of ultra-high spatial resolution, providing a data basis for quantitative evaluation and locating of defects of the pipeline.

2. A pipeline defect in-line inspector based on planar magnetic flux leakage array imaging of claim 1, wherein the planar micro-element array magnetic sensing unit is a unit of tightly arranged Hall or tunnel magnetoresistance sensors, or another planar micro-element array composed of magnetic sensors which convert magnetic signal to electrical signal; multiple sample and hold circuits, a synchronous trigger circuit and multiple analog to digital converters compose a magnetic flux leakage image high-speed synchronous acquisition unit, each magnetic sensing micro-element, i.e. the magnetic sensor electrical signal output terminal is connected to its corresponding sample and hold circuit, all sample and hold circuits are connected to the synchronous trigger circuit; when a trigger signal outputted by the synchronous trigger circuit is arrived, all sample and hold circuits synchronously hold their respective current electrical signals outputted by their corresponding magnetic sensing micro-elements, and send their respective current electrical signals to their corresponding analog to digital converters in the backend to convert them into digital signals, all digital signals form a data matrix according to the locations of magnetic sensing micro-element in planar magnetic flux leakage array imaging module, and the data matrix is a magnetic flux leakage image.

3. A pipeline defect in-line inspector based on planar magnetic flux leakage array imaging of claim 1, wherein the planar micro-element array magnetic sensing unit is made of magnetic sensitive material, an image sensor is taken as a magnetic flux leakage image high-speed synchronous acquisition unit;
if change of light intensity is used to represent strength of magnetic field, the optical signals modulated by magnetic sensitive material incident on the image sensor after focusing through an optical path; if polarization state of light is used to represent strength of magnetic field, the optical signals modulated by magnetic sensitive material incident on the image sensor after detecting by a polarizer and focusing through an optical path; the image sensor operates in global exposure mode, and exposure time should be short enough to meet high spatial resolution imaging requirement under high-speed moving state of the pipeline defect in-line inspector, the image acquired by the image sensor is a magnetic flux leakage image.

4. A pipeline defect in-line inspector based on planar magnetic flux leakage array imaging of claim 1, wherein synchronizing the plurality of magnetic flux leakage images with an acquisition location by the location and magnetic flux leakage image synchronization module is:
the location and magnetic flux leakage image synchronization module acquires a location of the pipeline defect in-line inspector in the pipeline and output a location synchronous acquisition signal at each time when the pipeline defect in-line inspector moves each a certain distance, the location synchronous acquisition signal triggers the plurality of magnetic flux leakage image high-speed synchronous acquisition units to acquire a plurality of magnetic flux leakage images and send the plurality of magnetic flux leakage images to the data storage module, and the acquired location is the acquisition location, the location synchronous acquisition signal triggers the data storage module simultaneously to store the acquisition location.

5. A pipeline defect in-line inspector based on planar magnetic flux leakage array imaging of claim 1, wherein synchronizing the plurality of magnetic flux leakage images with an acquisition location by the location and magnetic flux leakage image synchronization module is:
the location and magnetic flux leakage image synchronization module sets acquisition time points of the plurality of magnetic flux leakage image high-speed synchronous acquisition units by a location synchronous acquisition signal, which makes time interval between two adjacent acquisitions of each magnetic flux leakage image high-speed synchronous acquisition unit is less than the time needed for the pipeline defect in-line inspector to move an axial length of a detecting region of a planar magnetic flux leakage array imaging module, and associates the plurality of magnetic flux leakage images with an acquisition location according to a time point of acquiring the plurality of magnetic flux leakage images and a time point of the acquisition location.

6. A pipeline defect in-line inspector based on planar magnetic flux leakage array imaging of claim 1, wherein the location and magnetic flux leakage image synchronization module is composed of a clock, a mileage wheel and an inertial navigation device, either individually or in combination;
when a time signal of clock is used as a reference signal, the time signal is sent as the location synchronous acquisition signal to the plurality of magnetic flux leakage image high-speed synchronous acquisition units, mileage wheel, inertial navigation device and the data storage module for marking a time point of acquiring a plurality of magnetic flux leakage images and a time point of acquiring a location during acquisition or storage and establishing the correspondence between a plurality of magnetic flux leakage images and a location by taking time as intermediate variable, namely realizing alignment of a plurality of magnetic flux leakage images with an acquisition location;
when a time signal of clock is used as a control signal, the time signal is sent as the location synchronous acquisition signal to the plurality of magnetic flux leakage image high-speed synchronous acquisition units, mileage wheel, inertial navigation device and the data storage module for controlling the synchronous acquisition or storage of a plurality of magnetic flux leakage images and a location and establishing the correspondence between a plurality of magnetic flux leakage images and a location by taking time as intermediate variable, namely realizing alignment of a plurality of magnetic flux leakage images with an acquisition location;
when mileage wheel, inertial navigation device are applied simultaneously, the locations of mileage wheel and inertial navigation device are compensated for each other.

7. A pipeline defect in-line inspector based on planar magnetic flux leakage array imaging of claim 6, wherein:
when the time signal of clock is used as a reference signal, the time signal is sent as the location synchronous acquisition signal to the plurality of magnetic flux leakage image high-speed synchronous acquisition units, mileage wheel, inertial navigation device and the data storage module, when acquiring a plurality of magnetic flux leakage images or acquiring a location, the time point is marked and sent to data storage module, or the time signal is sent to the data storage module, when data storage module receives a plurality of magnetic flux leakage images or an acquisition location, the time point of receiving is marked to the plurality of magnetic flux leakage images or the acquisition location;
when a time signal of clock is used as a control signal, the plurality of magnetic flux leakage image high-speed synchronous acquisition units acquires a plurality of magnetic flux leakage images, and mileage wheel and inertial navigation device acquires a location, after receiving the time signal, and the correspondence between a plurality of magnetic flux leakage images and a location is established in data storage module according to the time point of receiving the time signal.

8. A pipeline defect in-line inspector based on planar magnetic flux leakage array imaging of claim 1, wherein the location and magnetic flux leakage image synchronization module is composed of a mileage wheel and an inertial navigation device separately or in combination;
when location and magnetic flux leakage image synchronization module separately adopts a mileage wheel or an inertial navigation device, the location generated by location and magnetic flux leakage image synchronization module is taken as a location synchronous acquisition signal and sent to the plurality of magnetic flux leakage image high-speed synchronous acquisition units and/or the data storage module, the plurality of magnetic flux leakage image high-speed synchronous acquisition units performs a global high-speed synchronous acquisition according to the location synchronous acquisition signal and obtains a plurality of magnetic flux leakage images, or marks a location during acquisition or storage, realizing alignment of a plurality of magnetic flux leakage images with an acquisition location;
when mileage wheel, inertial navigation device are applied simultaneously, the locations of mileage wheel and inertial navigation device are compensated for each other.
